# EUROPEAN PATENT APPLICATION

(11) **EP 1 944 769 A1**
(43) Date of publication of application: **16.07.2008**
(21) Application number: 05026957.0
(22) Date of filing: 09.12.2005
(51) Int. Cl.: G11B 27/00

(54) **Methods and devices for selection and synchronous simulcast of content.**

(71) Applicant: BenQ Corporation, Gueishan Taoyuan 333 (TW)
(72) Inventor: The designation of the inventor has not yet been filed
(74) Representative: Brandenburger, Karin

(57) **Abstract**

Content selection at a first reproduction device and real time synchronous simultaneous broadcast (simulcast) of multimedia packets (e.g. MMS) with prescribed delay to start presentation of content according to network type or device capability at both the first and at least a second reproduction device. The synchronisation of media packets makes use of time stamps.

## Description

### Field of the invention

The invention relates to contents reproduction devices.

### Background

Information content has had a large impact on the shape of the modern society. Some forms of information content, especially audio or video, that can be highly affecting emotionally, may be consumed together with other people.

A person may share his or her music experience with others by using a music reproduction device, such as a ghetto blaster or home stereo. More discrete reproduction of music is possible using a Y cable adapter, by using which two persons located close to each other can listen to music with their headphones. By using wireless headsets, music can be broadcast to two or more radio headphones from one playback device.

As soon as the listeners are not within a confined area that has been equipped with loudspeakers, shared listening of music tends to get more difficult. Many users find wireless headsets uncomfortable, for example.

### Summary of the invention

An objective of the invention is to bring out a new way for shared consumption of information content. This objective can be met with a method as set out in claim 1 or with devices as set out in claims 6 and/or 11.

The dependent claims describe various advantageous embodiments of the invention.

### Advantages of the invention

If a method for reproducing content, especially music or video, comprises the steps of i) selecting content at a first contents reproduction device; ii) delivering said content to at least one further contents reproduction device over at least one communication network; iii) synchronizing the presenting of said content between the first contents reproduction device and the at least one further contents reproduction device; and iv) reproducing said content at the first contents reproduction device and at the at least one further contents reproduction device, the content may be consumed by two or more persons that are not necessarily located close to each other, still in a synchronized manner so that the shared user experience is possible.

If at least a part of the content is delivered as media packets using Real Time Protocol, the media packets comprising time stamps, a particularly simple solution for transmitting content can be obtained.

If the synchronizing step comprises the step of delivering timing information to the at least one further representation device, the synchronization may be performed with less complexity and also requirements for accuracy of timing devices at the contents reproduction devices may not be that strict.

### List of Drawings

In the following the invention will be described in more detail with reference to examples shown in the accompanying drawings, of which:
Figure 1 illustrates interaction between a contents reproduction device and two further contents reproduction devices;
Figure 2 illustrates interaction between contents reproduction devices;
Figure 3A illustrates a contents reproduction device; and
Figure 3B shows some functional blocks of the contents reproduction device of Figure 3A.

### Detailed description

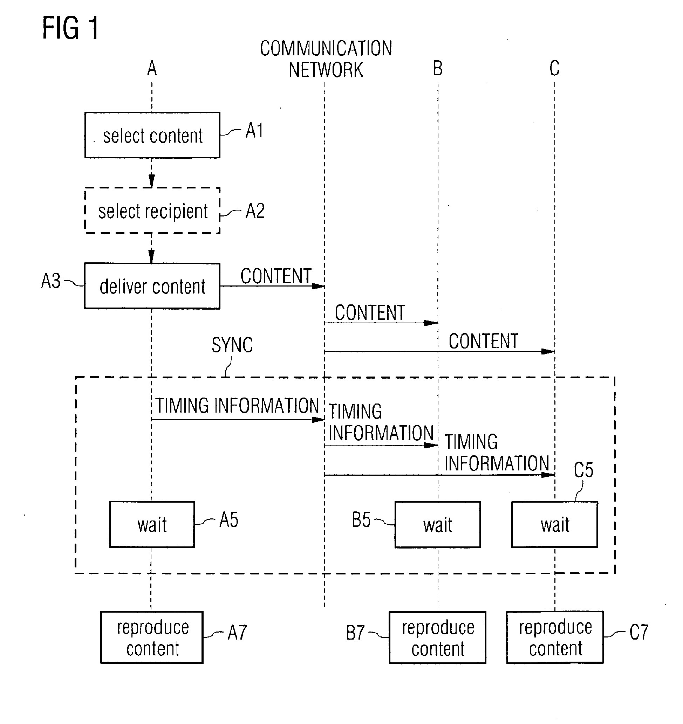

Figure 1 illustrates interaction between a contents reproduction device A and two further contents reproduction devices B, C. The content may be any content, but preferably it consists of or comprises music or video file.

In step A1, responsive to a command from the user of the first contents reproduction device A, content is selected.

In step A2 that is optional, one or more recipient may be selected, in Figure 1 the recipients are contents reproduction devices B and C.

In step A3 said selected content is delivered to the contents reproduction devices B, C over at least one communication network. Preferably, all or at least a part of the content is delivered as media packets using Real Time Protocol, the media packets comprising time stamps.

In synchronizing step SYNC, the presenting of the content is synchronized between the first contents reproduction device A and the contents reproduction devices B, C. The synchronizing step SYNC may comprise waiting steps A5, B5, C5 at different contents reproduction devices A, B, C, respectively, whereby the different waiting steps A5, B5, C5 may be of different duration so that the synchronized reproduction can be achieved.

The synchronizing step SYNC preferably comprises the step of delivering timing information to the further representation devices B, C. The timing information may be delivered using Session Definition Protocol, for example.

In reproducing steps A7, B7, C7 said content is reproduced at the first contents reproduction device A and at the further contents reproduction devices B, C.

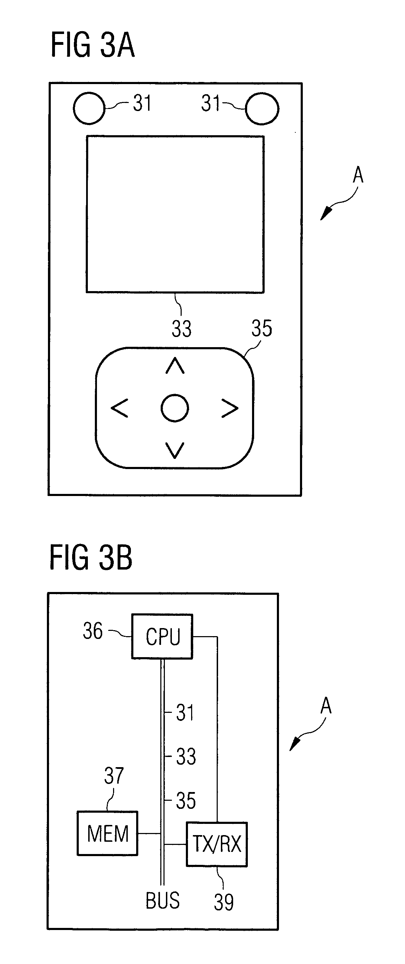

Figure 3A illustrates a contents reproduction device A. The contents reproduction device A preferably comprises at least one audio output 31, such as loudspeaker, a video output 33, such as a display, and an input device 35, such as a joystick or keypad.

Figure 3B shows some further functional blocks of the contents reproduction device A. A processing unit 36, such as a microprocessor, may be used to control the audio output 31, the video output 33 and to receive information from the input device 35. Some functional blocks, such as analog/digital converters and amplifiers have, for the sake of clarity, been omitted from the Figure.

Furthermore, the content reproduction device A may comprise a memory 37, and a receiving / transmitting unit 39.
The functional blocks may be connected to the processing unit 36 via one or more connection buses, and the receiving / transmitting unit 39 may have a dedicated bus, especially if the receiving / transmitting unit 39 is a radio communication unit, because otherwise in the latter case interference effects in the other part of the contents reproduction device 39 could tend to cause problems.

The processing unit 36 is adapted to select content responsive to user input from the input device 35, and then to use the receiving / transmitting unit 39 to deliver said content to at least one communication network for further delivery to at least one contents reproduction device B, C.

The processing unit 36 is preferably further adapted to delay the presenting of said content in response to timing information received from the communication network or from a contents reproduction device B, C. Alternatively or in addition, the delay may be estimated and set by the processing unit 36. The processing unit may be further adapted to set the timing information in response to a transmission characteristic of the at least one communication network or of the at least one further contents reproduction device B, C. The contents reproducing device A, especially the processing unit 36, can be adapted to use Session Definition Protocol to generate timing information.

When the contents reproduction device A performs delivering step A3, the processing unit is preferably adapted to add time stamps to media packets comprising at least a part of the content, before the receiving / transmitting unit 39 is used to deliver said media packets to at least one communication network using Real Time Protocol.

Preferably, the processing unit 36 further comprises functional blocks, such as decoders, to generate a representation of the content that when passed to audio output 31 or video output 33 can be observed as a local reproduction of the content.

The contents reproduction devices B and C may comprise similar functional blocks as the contents reproduction device A. The functional blocks of the content reproduction device A may furthermore be adapted to perform the tasks of the functional blocks of the contents reproduction devices B, C.

In particular, the processing unit 36 can be adapted to receive content received by the receiving / transmitting unit 39 from a communication network.

The processing unit 36 is preferably adaoted to receive timing information received by the receiving / transmitting unit 39 from a communication network, and adapted to delay the representing of said content in response to the timing information.

A master-client principle can be used for contents reproduction devices A, B, C to enable remotely controlling the simultaneous reproduction of content. This can be carried by using a pairing or authorization on one hand on the transmitting level between the devices (device A may access device B, C, ..), on the other hand also on the application level, e.g. in a media player application executable in the processing unit 36.

That the content can be represented synchronously can be guaranteed by performing an execution time check in advance, wherein latency time of the physical and logical connection can be checked.

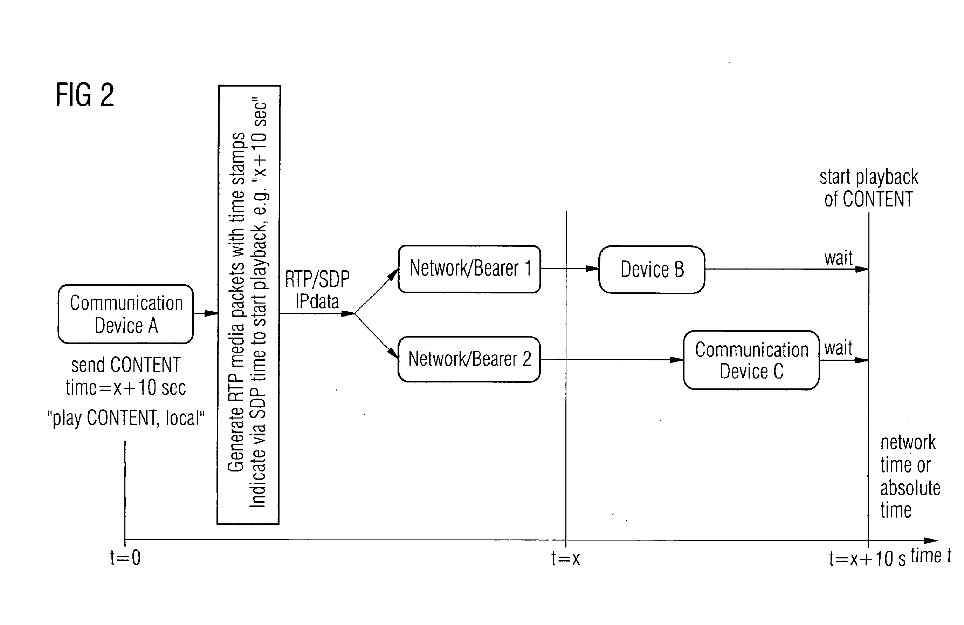

Figure 2 illustrates interaction between contents reproduction devices according to a first use scenario where three runners meet up to do an exercise jointly. The three runners would like to run with music, but everyone does not have the same music titles in their contents reproduction devices.

Runner 1 that has contents reproduction device A overtakes the control function for the contents reproduction device B, C of runners 2 and 3, respectively. The contents reproduction device A streams the desired music titles to contents reproduction devices B, C. In order to obtain a synchronized reproduction on all contents reproduction devices A, B, C, the contents reproduction device A measures the execution time at the other contents reproduction devices B, C. It may be that the contents reproduction device B is connectable over GPRS, whereas contents reproduction device C is connectable over UMTS. Or it may be that all contents reproduction devices connectable A, B, C are connectable over GPRS but via different network operators, possibly even with different network service characteristics.

In a second use scenario, a couple is walking on a beach, possibly on a very windy day. Both can associate to the situation, place or to the weather particular pieces of music, "suitable music", from their past. Both have their own contents reproduction devices along. Because play back software and medium files are locally available, possible problems regarding licenses and Digital Rights Management (DRM) can be avoided. The contents reproduction device of person 1 connects over a wireless interface to the contents reproduction device of person 2. Person 2 enables or has enabled the access. The music playback function of contents reproduction device 1 connects to that of contents reproduction device 2. Now person 1 can start a piece of music with his contents reproduction device so that it will be played back simultaneously at the contents reproduction device of person 2. Also in this use scenario, the different reaction times and latency times of the contents reproduction devices may be taken into account. So the starting of the play back of the piece of music may be delayed by the reaction time and latency time. In this manner, the play back can be synchronized and the couple may dance spontaneously but in dignity.

The contents reproduction device may be any device suitable for locally reproducing some kind of content. In particular, it may be a mobile terminal, a mobile telephone, a portable computer, a Portable Digital Assistant, a music player such as IPOD or other MP3 player.

The skilled person appreciates that even though the invention has been described by way of some examples, it is not limited to them, but can be modified in any manner within the scope and spirit of the patent claims.

## Claims

1. A method for reproducing content, especially music or video, comprising the steps of:
- selecting (Al) content at a first contents reproduction device (A);
- delivering (A3) said content to at least one further contents reproduction device (B, C) over at least one communication network;
- synchronizing (SYNC) the presenting of said content between the first contents reproduction device (A) and the at least one further contents reproduction device (B, C); and
- reproducing (A7, B7, C7) said content at the first contents reproduction device (A) and at the at least one further contents reproduction device (B, C).

2. A method according to claim 1, wherein: at least a part of the content is delivered as media packets using Real Time Protocol, the media packets comprising time stamps.

3. A method according to claim 1 or 2, wherein: the synchronizing step (SYNC) comprises the step of delivering timing information to the at least one further representation device (B, C).

4. A method according to claim 3, wherein: the timing information is delivered using Session Definition Protocol.

5. A method according to any one of the preceding claims, wherein: the content is a music or video file.

6. A contents reproduction device (A) comprising:
- a means (36, 35) adapted to select content, especially music or video;
- a means (36, 39) adapted to deliver said content to at least one communication network for further delivery to at least one further contents reproduction device (B, C) ;
- a delaying means (36, 39) adapted to delay the presenting of said content in response to timing information; and
- a means adapted to locally reproduce said content (36, 31, 33).

7. A contents reproduction device (A) according to claim 6, wherein: the delaying means (36) is adapted to set the timing information in response to a transmission characteristic of the at least one communication network or of the at least one further contents reproduction device (B, C).

8. A contents reproduction device (A) according to claim 6 or 7, wherein: the means (36, 39) adapted to add time stamps to media packets comprising at least a part of the content, and to deliver said media packets to at least one communication network using Real Time Protocol.

9. A contents reproduction device (A) according to claim 6, 7, or 8, wherein: the contents reproducing device (A) is adapted to use Session Definition Protocol to generate timing information.

10. A contents reproduction device (A) according to any one of claims 6 to 9, wherein: the content is a music or video file.

11. A contents reproduction device (B, C), comprising:
- a means (36, 39) adapted to receive content from a communication network;
- a means (36, 39) adapted to receive timing information from a communication network;
- a means (36) adapted to delay the presenting of said content in response to the timing information; and
- a means (36, 31, 33) adapted to locally reproduce said content.

12. A contents reproduction device (B, C) according to claim 11, wherein: the means (36, 39) adapted to receive timing information are adapted to receive time stamps from media packets comprising at least a part of the content, the media packets being received from a communication network using Real Time Protocol.

13. A contents reproduction device (B, C) according to claim 11 or 12, wherein: the contents reproducing device (B, C) is adapted to use Session Definition Protocol to receive timing information.

14. A contents reproduction device (B, C) according to any one of claims 11 to 13, wherein: the content is a music or video file.
